# EUROPÄISCHE PATENTSCHRIFT

(11) **EP 0 920 255 B1**
(45) Veröffentlichungstag und Bekanntmachung des Hinweises auf die Patenterteilung: **08.03.2000**
(21) Anmeldenummer: 97936659.8
(22) Anmeldetag: 25.07.1997
(51) Int. Cl.: A21C 3/02

(54) **QUERWALZWERK**
TRANSVERSE ROLLING DEVICE
DISPOSITIF DE ROULAGE TRANSVERSAL

(30) Priorität: 21.08.1996 DE 19633564
(43) Veröffentlichungstag der Anmeldung: 09.06.1999
(73) Patentinhaber: A. FRITSCH GMBH & CO. KG, D-97348 Markt Einersheim (DE)
(72) Erfinder: BERNHARDT, Udo, D-97346 Iphofen (DE)
(74) Vertreter: Götz, Georg, Dipl.-Ing.
(86) Internationale Anmeldenummer: EP9704054
(87) Internationale Veröffentlichungsnummer: WO9807323

(56) Entgegenhaltungen:
- EP-A- 0 326 404
- DE-A- 3 134 577
- DE-A- 4 416 522
- DE-U- 8 704 588
- US-A- 2 735 379

## Beschreibung

Die Erfindung betrifft eine Vorrichtung zum Walzen von gefördertem Teig insbesondere quer zu seiner Förderrichtung, bei der vorgesehen ist ein Rahmen, der eine Linearführung aufweist, ein Schlitten, der in, an, und/oder längs der Linearführung verstellbar gelagert ist, eine Teigwalze oder -rolle, die im oder am Schlitten drehbar gelagert ist, und wenigstens eine Antriebseinrichtung, mit der der Schlitten zu seiner Linearverstellung und die Walze zu ihrem Drehantrieb gekoppelt sind.

Bei der Teigverarbeitung dienen Querwalzwerke allgemein zur Vor- oder Nachbehandlung von Teig, insbesondere nach Satellitenkopfmaschinen oder Teigbandformern.

Querwalzwerke etwa der eingangs genannten Art (EP-0 478 242 A) sind bekannt. Der Schlitten zur Lagerung der Querwalze ist auf zwei parallelen Stangen geführt, die sich von einer Innenseite zur anderen des Walzwerkrahmens erstrecken. Der Antrieb wird mittels Elektromotor, Kettenrädern und einem damit in Eingriff stehenden Kettentrieb bewerkstelligt, der kontinuierlich vom Elektromotor in einer Umlaufrichtung angetrieben wird. Die Kopplung der Zahnradkette mit dem Querwalzschlitten, der quer zur Teigförderrichtung reversierend bzw. hin- und herbewegt werden muß, erfolgt mittels eines sogenannten Kulissenschiebers. Der zugehörige Kulissenstein, der in einer in Förderrichtung verlaufenden Nut des Schiebers hin- und hergleitbar geführt ist, ist direkt mit der in einer Richtung umlaufenden Zahnradkette verbunden. Das andere, die Nut aufweisende Teil des Kulissenschiebers ist direkt mit dem Querwalzschlitten verbunden. Aufgrund dieser Struktur des Reversiermechanismus verbleibt ausreichender Einbauraum nur noch für relativ dünne, parallele Führungsstangen unterhalb der umlaufenden Zahnradkette. Bei diesen Führungsstangen sind Elastizitäten, Verformungen und Nachgiebigkeiten im Querwalzbetrieb unvermeidlich, was die Präzision der Schlitten-Querführung und die Qualität des Querwalzens beeinträchtigt. Ein weiterer Nachteil besteht in der Notwendigkeit, die umlaufende Kette und den Kulissenschieber regelmäßig warten, insbesondere schmieren zu müssen. Dies gilt auch für den Zahnstangen-Ritzel-Antrieb, der zur Umsetzung der Energie der Linearbewegung des Querwalzschlittens in eine Drehbewegung für die Teigwalze dient. Zwar sind als Schmiermittel Lebensmittelfette oder -öle vorgeschrieben, jedoch läßt sich die Einhaltung dieser Vorschriften nur schwer kontrollieren. Ferner sind Kettentriebe schwer und aufwendig zu reinigen. Hinzu kommt noch, daß nach Reinigung die Kettentriebe erneut gefettet werden müssen. Ein weiterer Nachteil bei der Verwendung von Kettenzahntrieben für das Querwalzwerk besteht in der außerordentlichen Geräuschemission.

Der Erfindung liegt die Aufgabe zugrunde, ein Querwalzwerk mit vermindertem Energieverbrauch und verringerter Geräuchsemission zu schaffen, bei dem vor allem die Gefahr der Kontamination des Teigbandes mit Schmierstoffen aufgrund über dem Teigband angeordneter Schmierstellen vermieden und damit die Einhaltbarkeit von Hygieneforderun en verbessert ist. Zur Lösung wird die Walzvorrichtung gemäß Anspruch 1 vorgeschlagen.

Im Gegensatz zu den Ketten, Zahnstangen, Zahnrädern und Kulissensteinen sind die nach der Erfindung eingesetzten Zahnriemenantriebe wartungsfrei. Schmierstellen und das bei herkömmlichen Kettentrieben notwendige Nachspannen können entfallen. Die meist aus Kunststoff gefertigten Zahnriemen laufen nun auf Zahnriemenscheiben aus Metall, was eine elastische Ankopplung mit erheblich verminderter Geräuschemission ergibt. Ein weiterer, mit der Erfindung erzielbarer Vorteil besteht darin, daß sich durch die verwendeten Riementriebe größere Achsabstände überbrücken lassen. Eine Teigverarbeitungsanlage kann also aufgrund der Erfindung quer zur Teigförderrichtung verbreitert werden. Bevorzugtes Herstellungsmaterial für die Zahnriemen ist Kunststoff, insbesondere Polyurethan, für die Zahnriemenscheiben Metall. Der Lauf von solchem elastischem Kunststoff auf Metall kann aufgrund dämpfender Elastizität reibungsarm, weitgehend verschleißfrei und mit geringer Geräuschentwicklung vor sich gehen.

Mit der Erfindung wird die besonders vorteilhafte Möglichkeit eröffnet, daß für eine stabile Ausführung der Linearführung ausreichend Platz und Einbauraum zumindest teilweise oberhalb des oder der Zahnriemengetriebe zur Verfügung steht, die dem Schlitten- und/oder Teigwalzenantrieb dienen. Die stabile Ausführung kann mittels einer Führungsschiene mit Kugelumlauf (sogenannten Kugel-Schienenführung) realisiert sein.

Nach der Erfindung ist der Schlitten mit einem Linearantriebs-Zahnriemen verbunden, der mit der Antriebseinrichtung gekoppelt ist, wobei diese ein Steuerungsmodul aufweist, mittels dessen die Antriebsrichtung für den Linear-Antriebs-Zahnriemen wiederholt umkehrbar ist. Damit ist die Notwendigkeit eines zu schmierenden Kulissenschiebers vermieden, und die regelmäßige Richtungsumkehr kann heutzutage mit geeigneten Frequenzumrichtem für elektrische Antriebsmotoren leicht bewerkstelligt werden. Die Ansteuerung zur Richtungsumkehr wird zweckmäßig in Abhängigkeit von Signalen aus Lageerkennungssensoren betrieben, welche die Annäherung des reversierend bewegten Schlittens mit der Teigwalze an die eine oder andere Innenwandung des Walzwerk- bzw. Vorrichtungsrahmens überwachen und detektieren.

Mit besonderem Vorteil ist im Steuerungsmodul eine von der Zeit abhängige Rampenfunktion für die Geschwindigkeit abgelegt. Damit ist ein "weiches" Abbremsen und Anfahren des Schlittens in die andere, umgekehrte Richtung gewährleistet.

Das Konzept mit dem Steuerungsmodul für die Antriebseinrichtung läßt sich weiter dahingehend ausbauen, daß wenigstens ein Eingang oder wenigstens eine Schnittstelle zur Vorgabe der Antriebsgeschwindigkeit für den Schlitten undloder die Teigwalze vorgesehen ist, der bzw. die mit einem Aufnehmer für die Teigfördergeschwindigkeit und/oder einem manuell betätigbaren Eingabemedium verbunden ist. Damit läßt sich eine Regelung der Querwalzgeschwindigkeit mit hoher Genauigkeit realisieren. Insbesondere kann diese an die Fördergeschwindigkeit und -leistung der Gesamtanlage angepaßt werden. Ein (teilweise) doppeltes Querwalzen derselben Spur quer zur Förderrichtung des Teiges läßt sich vermeiden. So läßt sich die Betriebsgeschwindigkeit für das Querwalzwerk vermindern und die Lebensdauer erhöhen. Über den genannten Eingang oder die genannte Schnittstelle des Steuerungsmoduls ist die erfindungsgemäße Vorrichtung leicht in eine Gesamtregelung einer Teigverarbeitungsanlage integrierbar.

Um einerseits eine Untersetzung zwischen der Drehzahl der Antriebseinrichtung bzw. des Antriebsmotors und der Schlitten- und/oder Teigwalzengeschwindigkeit und andererseits eine platzsparende Konstruktion zu erreichen, ist nach einer besonderen Ausbildung der Erfindung der genannte Linearantriebs-Zahnriemen mit der Antriebseinrichtung über ein Vorgelege realisiert, dessen Zahnriemenscheibe koaxial vom Linearantriebs-Zahnriemen zum Schlitten und von einem Verbindungszahnriemen zum Antriebsmotor umfaßt ist.

Weitere Einzelheiten, Merkmale, Wirkungen und Vorteile ergeben sich aus den Unteransprüchen und der nachfolgenden Beschreibung eines bevorzugten Ausführungsbeispiels der Erfindung sowie den Zeichnungen. Diese zeigen in:
- Fig. 1: eine Ansicht auf eine Längsseite eines erfindungsgemäßen Querwalzwerks,
- Fig. 2: eine Ansicht auf die andere, parallele Längsseite des Querwalzwerks nach Fig. 1, und
- Fig. 3: eine perspektivische Stirnansicht auf die erfindungsgemäße Vorrichtung.

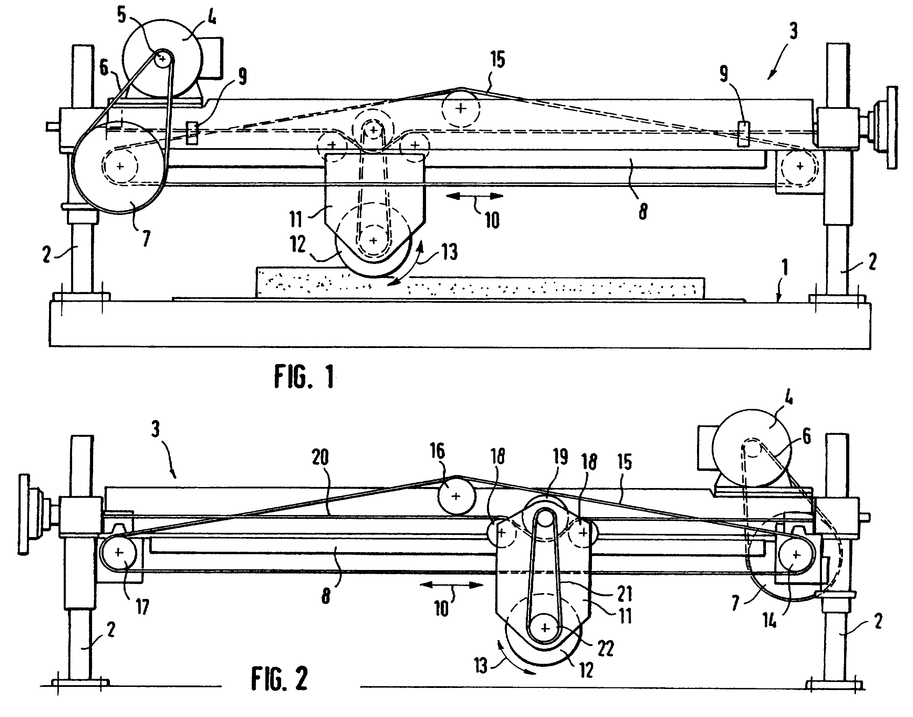

Gemäß Fig. 1 sind zu beiden Seiten einer Teig-Förderstrecke 1 Tragsäulen 2 angeordnet, die zum Rahmen 3 des gezeigten Querwalzwerks gehören. Auf der Oberseite im Randbereich des Rahmens 3 ist ein Antriebsmotor 4 befestigt, der einen senkrecht zur Zeichenebene vorspringenden Abtriebswellenstummel 5 mit Außenverzahnung aufweist. Damit steht ein Verbindungszahnriemen 6 in Eingriff, der den gezahnten Umfang größeren Durchmessers eines Vorgeleges 7 umfaßt.

An der horizontalen Unterseite des Rahmens 3 ist eine Kugel-Schienenführung 8 als Linearführung befestigt und erstreckt sich quer zur Teigförderstrecke 1 von einer Seite zur anderen Seite des Querwalzwerks, die jeweils mit einer der Tragsäulen 2 gebildet sind. In der Nähe dieser Seiten bzw. Ränder des Querwalzwerks ist je ein induktiver Lageerkennungssensor 9 angeordnet, die auf den je nach Antrieb horizontale Hin- und Herbewegungen 10 entlang der Linearführung 8 ausführenden Schlitten 11 ausgerichtet sind. An diesem ist die Teigrolle oder -walze 12 zum Walzen von Teig auf der Förderstrecke 1 in Querrichtung so gelagert, daß ihr Drehungen 13 in entgegengesetzte Richtungen entsprechend der jeweiligen Querwalz-Laufrichtung erteilt werden können.

Gemäß Fig. 2 ist beim Vorgelege 7 auf der Stirnseite, die der mit dem Verbindungszahnriemen 6 entgegengesetzt ist, eine treibende Zahnriemenscheibe 14 koaxial vorspringend angesetzt, mit deren Außenverzahnung ein Linearantriebs-Zahnriemen 15 in Eingriff steht. Dieser erstreckt sich über eine Umlenkscheibe 16 zu einer mitgedrehten Zahnscheibe 17 auf einer Rahmenseite, die der der treibenden Zahnriemenscheibe 14 gegenüberliegt. Im weiteren Verlauf ist der Linearantriebs-Zahnriemen 15 zum in der Kugel-Schienenführung 8 verschiebbar angebrachten Schlitten 11 geführt, der mit diesem Zahnriemen 15 fest verbunden ist. Er kann an beiden Enden entweder im Schlitten 11 fixiert sein oder diesen in fester, starrer Verbindung mit ihm durchsetzen. Im Bereich oberhalb der Teigwalze 12 ist zwischen zwei Umlenk- und/oder Spannscheiben 18 ein weiteres Vorgelege 19 drehbar am Schlitten 11 gelagert. Dieses steht im Eingriff über seinen größeren Zahnungsdurchmesser mit einem Umsetzer-Zahnriemen 20 einerseits und über seinem kleineren Zahnungsdurchmesser mit einem Walzenzahnriemen 21 andererseits. Der Umsetzer-Zahnriemen 20 ist an seinen Enden jeweils im Bereich der Tragsäulen 2 fest bzw. starr eingespannt. Die beiden am Schlitten 11 drehbar gelagerten Spannscheiben 18, zwischen denen das zweite Vorgelege 19 angeordnet ist, lenken in Wirkungsverbindung mit dem zweiten Vorgelege 19 bzw. dessen äußeren, größeren Zahnungsumfang den Umsetzer-Zahnriemen 20 quer zu seiner Längsrichtung nach unten in Richtung zur Teigförderstrecke 1 aus, wobei beide Spannscheiben 18 sowie der größere Zahnungsumfang des Vorgeleges 19 mit dem Umsetzer-Zahnriemen in Eingriff stehen. Die Teigwalze 12 besitzt ebenfalls einen Vorgelegevorsprung 22 mit verzahntem Außenumfang, der vom Walzenzahnriemen 21 umfaßt ist.

Zur Wirkungsweise des Querwalzwerks gemäß Fig. 1 und 2 sei folgendes ausgeführt: Bei Betrieb des Antriebsmotors 4 mit Rotation seines Abtriebswellenstummels wird das Vorgelege 7 ebenfalls in Drehung versetzt. Dadurch wird dem Linearantriebs-Zahnriemen 15 eine Umlauf- bzw. Hin- oder Herbewegung 10 erteilt, von der der Schlitten 11 in der Linearführung 8 entsprechend mitgenommen wird. Da im Schlitten 11 das zweite Vorgelege 19 drehbar gelagert und ansonsten fest angeordnet ist, rollt es aufgrund des Verzahnungseingriffs mit dem in Längsrichtung stillgehaltenen Umsetzer-Zahnriemen 20 daran ab und gerät in Drehung. Diese wird über den Walzenzahnriemen 21 und den Vorgelegevorsprung 22 auf die mit diesem koaxiale Teigwalze 12 übertragen, wodurch dieser eine Drehung 13 erteilt wird. Ist der Schlitten 11 von einem Seitenende des Rahmens 3 zum anderen verfahren, läßt sich dies durch den jeweiligen Lageerkennungssensor 9 detektieren, der daraufhin einem (nicht gezeichneten) Frequenzumrichter des Antriebsmotors 4 ein entsprechendes Signal gibt. Daraufhin wird entsprechend einer einprogrammierten Geschwindigkeits-Zeit-Kennlinie mit Gestalt einer Rampenfunktion der Motor bzw. der davon angetriebene Schlitten verzögert bis zur Drehrichtungsumkehr. Mit einer entsprechenden Rampenfunktion kann nach Drehrichtungsumkehr der Motor wieder anfahren bis zur Endgeschwindigkeit. Die Ausstattung des Antriebsmotors 4 mit Frequenzumrichter ermöglicht ferner eine Geschwindigkeitsregelung, wodurch eine Anpassung an unterschiedliche Teigfördergeschwindigkeiten und Teigqualitäten ermöglicht ist.

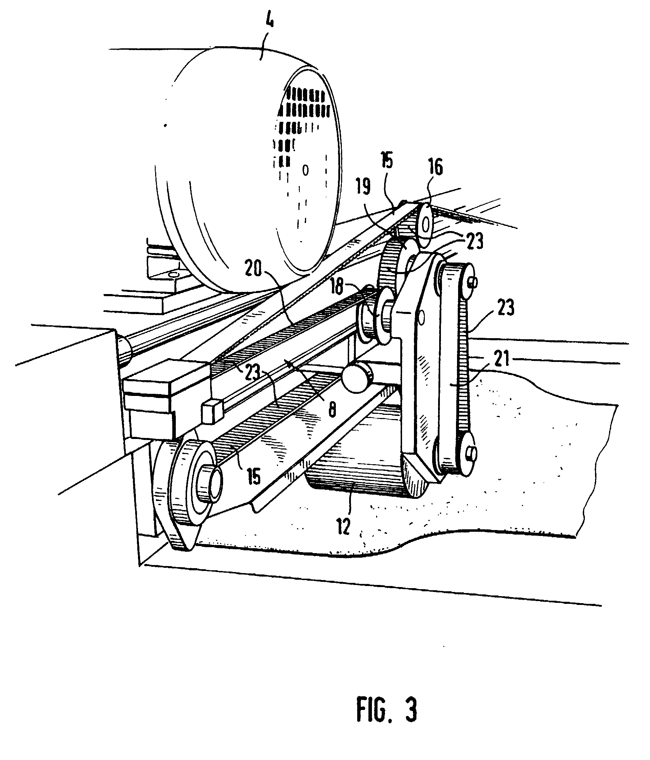

Weitere Details sind aus Fig. 3 ersichtlich. Insbesondere läßt sich die spezielle Ausführung der Linearführung 8 als Kugel-Schienenführung erkennen. Ferner sind die Verzahnungen des Linearantriebs-Zahnriemen 15, der Umlenkscheibe 16, des größeren Außenumfangs des zweiten Vorgeleges 19 und des Umsetzer-Zahnriemens 20 jeweils mit 23 angedeutet. Die Linearführung 8 ist oberhalb des unteren Abschnitts des Linearantriebs-Zahnriemens 15 angeordnet. Horizontal gesehen verläuft der Linearantriebs-Zahnriemen 15 in Richtung der Teigförderstrecke 1 versetzt gegenüber dem Umsetzer-Zahnriemen 20, damit beide nebeneinander ungestört ihre Wirkung entfalten können. Dementsprechend sind auch die Umlenkscheibe 16 und das zweite Vorgelege 19 in Richtung der Teigförderstrecke 1 versetzt angeordnet.

## Patentansprüche

1. Vorrichtung zum Walzen von gefördertem Teig insbesondere quer zu seiner Förderrichtung (1), mit einem Rahmen (3), der eine Linearführung (8) hält, mit einem Schlitten (11), der in, an und/oder längs der Linearführung (8) verstellbar gelagert ist, mit einer Teigwalze (12), die im oder am Schlitten (11) drehbar gelagert ist, und mit wenigstens einer Antriebseinrichtung (4), mit der der Schlitten (11) zu seiner Linearverstellung (10) und die Walze (12) zu ihrem Drehantrieb (13) gekoppelt sind, wobei die Antriebseinrichtung (4) mit einem Steuerungsmodul derart versehen ist, daß die Antriebsrichtung für den Schlitten (11) wiederholt umkehrbar ist, **dadurch gekennzeichnet, daß** die Kopplungsmittel zwischen der Teigwalze (12) und/oder dessen Schlitten (11) und der Antriebseinrichtung (4) mit einem oder mehreren Zahnriemengetrieben realisiert sind, die flexible und/oder elastische Zahnriemen (6,15,20,21) aufweisen, und der Schlitten (11) mit einem Linearantriebs-Zahnriemen (15) verbunden ist, der mit der Antriebseinrichtung (4) gekoppelt ist, wobei die Teigwalze (12) mit den Schlittenbewegungen (10) über einen Umsetzer für Linear- in Drehbewegungen gekoppelt ist, und der Umsetzer mit einem an gegenüberliegenden Innenseiten des Rahmens (3) in Längsrichtung stillgehaltenen Umsetzerzahnriemen (20) ausgeführt ist, mit dem die Teigwalze (12) zu deren Drehung (13) gekoppelt ist.

2. Vorrichtung nach Anspruch 1, dadurch gekennzeichnet, daß der Zahnriemen (6,15,20,21) aus oder mit Kunststoff, insbesondere Polyurethan, hergestellt ist.

3. Vorrichtung nach Anspruch 1 oder 2, dadurch gekennzeichnet, daß die Linearführung mittels einer Führungschiene (8) vorzugsweise mit Kugelumlauf realisiert ist.

4. Vorrichtung nach einem der vorangehenden Ansprüche, dadurch gekennzeichnet, daß das Steuerungsmodul mit einem oder mehreren Sensoren (9) zur Lageerkennung verbunden ist und in Abhängigkeit von deren Signalen die Antriebsgeschwindigkeit verändert.

5. Vorrichtung nach Anspruch 4, dadurch gekennzeichnet, daß im Steuerungsmodul eine Rampenfunktion implementiert ist, gemäß welcher aufgrund der Zeitpunkte der Umkehr der Antriebsrichtung die Antriebsgeschwindigkeit über die Zeit veränderbar ist.

6. Vorrichtung nach einem der Ansprüche 4 oder 5, dadurch gekennzeichnet, daß das Steuerungsmodul wenigstens einen Eingang oder wenigstens eine Schnittstelle zur Vorgabe der Antriebsgeschwindigkeit für den Schlitten (11) und/oder die Teigwalze (12) aufweist, der beziehungsweise die mit einem Aufnehmer für die Teigfördergeschwindigkeit und/oder einem manuell betätigbaren Eingabemedium verbunden ist.

7. Vorrichtung nach einem der vorangehenden Ansprüche, gekennzeichnet durch eine am Schlitten (11) drehbar angebrachte Zahnriemenscheibe , insbesondere Vorgelege (19), die beziehungsweise das in Eingriff steht mit dem Umsetzerzahnriemen (20) und über einen durch den Schlitten (11) verlaufenden Walzenzahnriemen (21) mit der Teigwalze (12) gekoppelt ist.

8. Vorrichtung nach einem der vorangehenden Ansprüche, dadurch gekennzeichnet, daß die Kopplung der Antriebseinrichtung (4) mit dem Linearantriebs-Zahnriemen (15) über ein Vorgelege (7) erfolgt, das mit dem Linearantriebs-Zahnriemen (15) in Eingriff steht und mit einer gezahnten Abtriebswelle (5) der Antriebseinrichtung (4) über einen Abtriebs-Zahnriemen (6) verbunden ist.

9. Vorrichtung nach einem der vorangehenden Ansprüche, dadurch gekennzeichnet, daß die Linearführung (8) zumindest teilweise oberhalb des oder der Zahnriemengetriebe angeordnet ist, die dem Schlitten (11) und/oder der Teigwalze (12) zugeordnet sind.

## Claims

1. Apparatus for rolling conveyed dough, in particular transverse to its direction of conveyance (1), having a frame (3), which holds a linear guide (8), having a slide (11), which is mounted displaceably in, on and/or along the linear guide (8), having a dough roller (12), which is rotatably mounted in or on slides (11), and having at least one drive (4), with which the slide (11) is coupled to its linear adjustment (10) and the roller (12) to its rotary drive (13), wherein the drive (4) is so provided with a control module that the drive direction for the slide (11) can be repeatedly reversed, characterised in that the coupling means between the dough roller (12) and/or its slide (11) and the drive (4) are realised with one or more toothed belt drives, which have flexible and/or resilient toothed belts (6, 15, 20, 21), and the slide (11) is connected to a linear drive toothed belt (15), which is coupled to the drive (4), wherein the dough roller (12) is coupled with the slide movements (10) via a device for converting linear into rotary motion, and the converter is formed with a converter toothed belt (20) which is held stationary in the longitudinal direction at opposite inner faces of the frame (3) and with which the dough roller (12) is coupled in order to rotate (13) the same.

2. Apparatus according to claim 1, characterised in that the toothed belt (6, 15, 20, 21) is manufactured from or with plastics material, in particular polyurethane.

3. Apparatus according to claim 1 or 2, characterised in that the linear guide is preferably realised by means of a guide rail (8), preferably with ball circulation.

4. Apparatus according to one of the preceding claims, characterised in that the control module is connected to one or more sensors (9) for position recognition and varies the drive speed as a function of its signals.

5. Apparatus according to claim 4, characterised in that in the control module an incline function is implemented, according to which, owing to the times of reversal of the drive direction, the drive speed is variable over time.

6. Apparatus according to one of claims 4 or 5, characterised in that the control module has at least one input or at least one interface for specifying the drive speed for the slide (11) and/or the dough roller (12), which is or are connected to a receiver for the dough conveying speed and/or a manually actuatable input medium.

7. Apparatus according to one of the preceding claims, characterised by a crown gear, in particular transmission gear (19), which is mounted rotatably on the slide (11) and which is respectively in mesh with the converter toothed belt (20) and is coupled with the dough roller (12) via a roller toothed belt (21) extending through the slide (11).

8. Apparatus according to one of the preceding claims, characterised in that the coupling of the drive (4) with the linear drive toothed belt (15) is effected via a transmission gear (7), which is in mesh with the linear drive toothed belt (15) and is connected to a toothed output shaft (5) of the drive (4) via an output toothed belt (6).

9. Apparatus according to one of the preceding claims, characterised in that the linear guide (8) is disposed at least in part above the toothed belt drive or drives, which are allocated to the slide (11) and/or the dough roller (12).

## Revendications

1. Dispositif destiné à rouler de la pâte transportée, notamment transversalement à sa direction de transport (1), comprenant un cadre (3), qui supporte un guidage linéaire (8), un chariot (11), qui est monté de manière déplaçable dans, sur et/ou le long du guidage linéaire (8), un rouleau à pâte (12), qui est monté en rotation dans ou sur le chariot (11), et au moins un dispositif d'entraînement (4) auquel sont couplés le chariot (11) pour son déplacement linéaire (10) et le rouleau (12) pour son entraînement en rotation (13), le dispositif d'entraînement (4) étant pourvu d'un module de commande de façon telle que le dispositif d'entraînement pour le chariot (11) puisse être inversé de manière répétée, caractérisé en ce que les moyens de couplage entre le rouleau à pâte (12) et /ou son chariot (11) et le dispositif d'entraînement (4) sont réalisés à l'aide d'une ou de plusieurs transmissions par courroie crantée, qui comportent des courroies crantées (6, 15, 20, 21) flexibles et/ou élastiques, et le chariot (11) est relié à une courroie crantée d'entraînement linéaire (15) qui est couplée au dispositif d'entraînement (4), le rouleau à pâte (12) étant couplé aux mouvements de chariot (10) par l'intermédiaire d'un convertisseur de mouvements linéaires en mouvements de rotation, et le convertisseur étant conçu avec une courroie crantée de convertisseur (20), retenue à l'arrêt dans la direction longitudinale sur deux côtés intérieurs opposés du cadre (3), et à laquelle est couplé le rouleau à pâte (12) pour sa rotation.

2. Dispositif selon la revendication 1, caractérisé en ce que la courroie crantée (6, 15, 20, 21) est fabriquée en ou avec de la matière plastique, notamment du polyuréthane.

3. Dispositif selon la revendication 1 ou 2, caractérisé en ce que le guidage linéaire est réalisé au moyen d'un rail de guidage (8), de préférence à circulation de billes.

4. Dispositif selon l'une des revendications précédentes, caractérisé en ce que le module de commande est relié à un ou plusieurs détecteurs (9) pour la reconnaissance de position, et modifie la vitesse d'entraînement en fonction de leurs signaux.

5. Dispositif selon la revendication 4, caractérisé en ce que dans le module de commande est mis en oeuvre une fonction rampe, selon laquelle, sur la base des instants de l'inversion de la direction d'entraînement, on fait varier la vitesse d'entraînement en fonction du temps.

6. Dispositif selon l'une des revendications 4 ou 5, caractérisé en ce que le module de commande présente au moins une entrée ou au moins une interface destinées à prescrire la vitesse d'entraînement pour le chariot (11) et/ou le rouleau à pâte (12), qui est reliée à un capteur pour la vitesse de transport de la pâte et/ou à un moyen de saisie à actionnement manuel.

7. Dispositif selon l'une des revendications précédentes, caractérisé par une poulie de courroie crantée montée en rotation sur le chariot (11), notamment une transmission intermédiaire (19), qui est en prise avec la courroie crantée de convertisseur (20) et est couplée au rouleau à pâte (12) à l'aide d'une courroie crantée de rouleau (21) s'étendant au travers du chariot (11).

8. Dispositif selon l'une des revendications précédentes, caractérisé en ce que le couplage du dispositif d'entraînement (4) à la courroie crantée d'entraînement linéaire (15) s'effectue par une transmission intermédiaire (7), qui est en prise avec la courroie crantée d'entraînement linéaire (15) et est reliée à un arbre de sortie (15) denté du dispositif d'entraînement (4) par l'intermédiaire d'une courroie crantée de sortie (6).

9. Dispositif selon l'une des revendications précédentes, caractérisé en ce que le guidage linéaire (8) est disposé au moins en partie au-dessus de la ou des transmissions à courroies crantées qui sont associées au chariot (11) et/ou au rouleau à pâte (12).
